# EUROPEAN PATENT APPLICATION

(11) **EP 1 245 449 A2**
(43) Date of publication of application: **02.10.2002**
(21) Application number: 01127967.6
(22) Date of filing: 23.11.2001
(51) Int. Cl.: B60R 11/02

(54) **In-vehicle display apparatus**

(30) Priority: 30.03.2001 JP 2001100677
(71) Applicant: CLARION Co., Ltd., Tokyo (JP)
(72) Inventor: Takeda, Yoshihisa, Tokyo (JP)
(74) Representative: Fritsche, Rainer, Dipl.-Wirtsch.-Ing.

(57) **Abstract**

An in-vehicle display device is provided which includes a unit (3) having a mounting portion (1) and a display panel (2), a driving mechanism (4) for moving the display panel (2), a status detection portion (5) for detecting the status of on-vehicle equipment, and a control circuit (6) for controlling the operation of the driving mechanism (4) in response to a detection signal from the status detection portion (5). The mounting portion (1) includes a housing (1a) for housing the display panel (2) and is installed in the ceiling in a vehicle. The display panel (2) has an upper end that is mounted, for rotation about a shaft, to the front end of the housing (1a). The driving mechanism (4) includes a motor (4a) and transmission portion for transmitting the power of the motor (4a) to the display panel (2). The status detection portion (5) includes a gear sensor (5a), a key sensor (5b), a signal output portion (5c), and an operation panel (5d) for operating the vehicle-mounted electronic equipment.

## Description

This invention relates to a display apparatus having a display portion which is installed in the ceiling of a vehicle and which displays video information. More specifically, the present invention relates to an in-vehicle display apparatus having improved opening and closing operations of the display portion.

In recent years, a wide variety of on-vehicle equipment have been developed in conjunction with advances of communication technologies. For example, a navigation system and a mechanism adjusting system for adjusting the seats have come into widespread use, as well as conventional equipment including a climate control system such as an air-conditioner, and audio systems such as a radio and CD player. The navigation system is equipped with a display apparatus such as, typically, an LCD with the ability to display, for example, TV broadcasting images or video recorded on a DVD. Furthermore, vehicle-mounted electronic equipment that is provided with a communication system including the Internet or an electronic mail capability has been developed.

Conventionally, in a display apparatus for the vehicle-mounted electronic equipment as described above, a display device is disposed in the center console or the like of a vehicle. In recent luxury automobiles, for example, the display device may also be disposed at a place other than in the center console so that passengers in the rear seat can view and listen to TV broadcasts or DVDs. In such a case, the display device is often installed in the ceiling due to the limited space available for the installation. That is, the upper end of the display device is mounted to the ceiling in the vehicle for pivotal movement about a shaft. With this arrangement, before use, the user manually rotates the display device downward so that the display screen is positioned so as to be viewable. After use, the user then manually rotates the display device upward into a housed position.

However, the in-vehicle display apparatus as described above requires the user to project the display device downward from the ceiling. This arrangement can obstruct the driver's view, for example, when reversing the vehicle or checking vehicles at the rear. In addition, if the user seated in the rear seat forgets to return the display device upward to the housed position, then the as-opened display device can be an obstacle when he or she gets into or out of the vehicle, because it occupies a certain amount of space near the user's head.

Accordingly, the present invention has been proposed to overcome the problems of the related art described above, and an object thereof is to provide an in-vehicle display apparatus in which the display portion thereof, which is installed in the ceiling of the vehicle, does not obstruct the driver's view and does not obstruct a user or passenger from getting in or out of the rear seat.

To this end, according to one aspect of the present invention, there is provided an in-vehicle display apparatus comprising a display portion having a screen for displaying video information. The display portion is mounted to a ceiling in a vehicle for movement between an open position, in which the screen of the display portion can be viewed by at least one passenger, and a closed position, in which the display portion is housed in the ceiling and cannot be viewed by the passenger. The in-vehicle display apparatus further comprises a driving mechanism which includes a motor for driving the driving mechanism and which moves the display portion, status detection means for detecting the status of on-vehicle equipment and for sending a detection signal; and control means for controlling the operation of the driving mechanism in response to the detection signal from the status detection means. This aspect of the present invention allows the switching of the opening/closing of the display portion installed in the ceiling of the vehicle interior in response to the state of the on-vehicle equipment. Thus, when the display portion is configured to move to the closed position in response to the driver operating certain on-vehicle equipment, the display panel does not obstruct the driver or other passengers.

The status detection means may include a gear status detection portion for detecting the gear status of the vehicle. In addition, the control means may include a reverse gear determination portion for determining that the status detection means detects a reverse gear operation, and a close operation instructing portion for outputting an instruction signal for operating the motor so as to cause the display portion to move to the closed position when the reverse gear determination portion determines the reverse gear operation. With this arrangement, when the driver shifts the gear lever into reverse to back up the vehicle, the display portion moves automatically to the closed position, so that the display portion does not obstruct the driver's view.

Preferably, the status detection means includes a key status detection portion for detecting the status of the ignition key of the vehicle. In addition, the control means preferably includes a key determination portion for determining that the status detection means detects removal of the ignition key, and a close operation instructing portion for outputting an instruction signal for operating the motor so as to cause the display portion to move to the closed position when the key determination portion determines removal of the ignition key. With this arrangement, when the driver stops the vehicle and removes the ignition key, the display portion moves automatically to the closed position, so that the display portion does not obstruct a passenger from getting in or out of the rear seat.

Preferably, the status detection means includes an equipment status detection portion for detecting the status of vehicle-mounted electronic equipment. In addition, the control means preferably includes an equipment status determination portion for determining that the equipment status detection portion detects a state in which no video needs to be displayed on the vehicle-mounted electronic equipment, and a close operation instructing portion for outputting an instruction signal for operating the motor so as to cause the display portion to move to the closed position when the equipment status determination portion determines the state in which no video needs to be displayed. With this arrangement, when the audio/video mode of the vehicle-mounted electronic equipment or the power supply thereof is turned OFF, that is, when no video is required, the display portion automatically moves to the closed position. Thus, this allows the passenger seated in the rear seat to eliminate the need for manually moving the display portion to the closed position.

The in-vehicle display apparatus may further comprise operation means for entering an operation instruction. The control means preferably includes a close operation instructing portion for outputting an instruction signal for operating the motor so as to cause the display portion to move to the closed portion in response to the operation instruction from the operation means. With this arrangement, when the driver needs to secure his or her field of view, for example, to check for vehicles at the rear, he or she can operate the operation means to move the display portion to the closed position.

Preferably, the control means includes an open operation instructing portion for outputting an instruction signal for operating the motor so as to cause the display portion to move to the open position when no instruction is inputted from the status detection means or the operation means. With this arrangement, when there is no need for the display portion to be kept in the closed position for the purpose of securing a good field of view, the display portion moves to the open position. Thus, the passenger seated in the rear seat can enjoy video displayed on the display portion again.

Preferably, the display portion includes a power circuit for supplying power thereto, and the control means includes a power supply switch portion for opening the power circuit when the close operation instructing portion outputs the instruction signal for operating the motor. With this arrangement, when the display portion is in the closed position, the display power supply is automatically shut off. This allows the power consumption to be reduced and the lifetime of the display portion to be improved.
Fig. 1 a perspective view of a display panel, installed in a vehicle, of an in-vehicle display apparatus according to an embodiment of the present invention;
Fig. 2 is a perspective view of the display panel according to the embodiment;
Fig. 3 is a functional block diagram of the control system according to the embodiment; and
Fig. 4 is a flow chart of the operation of the embodiment.

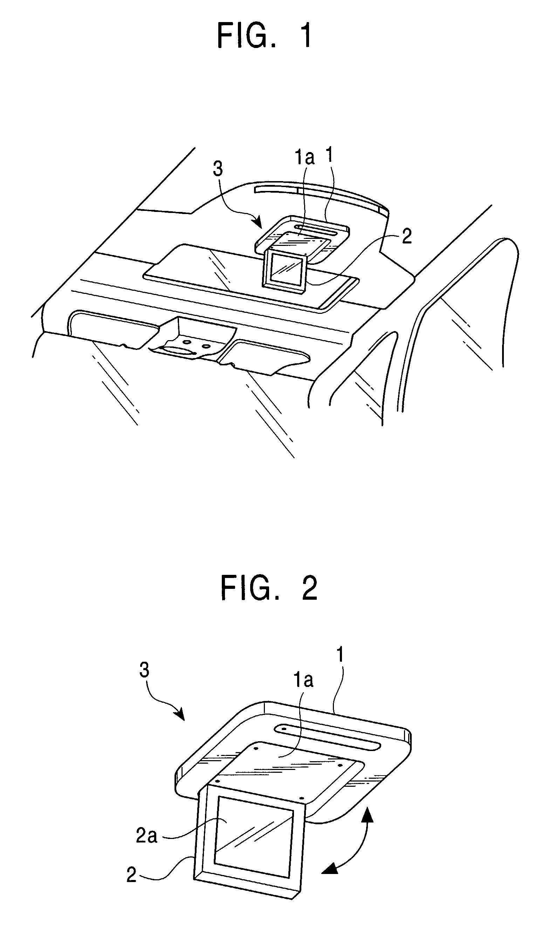

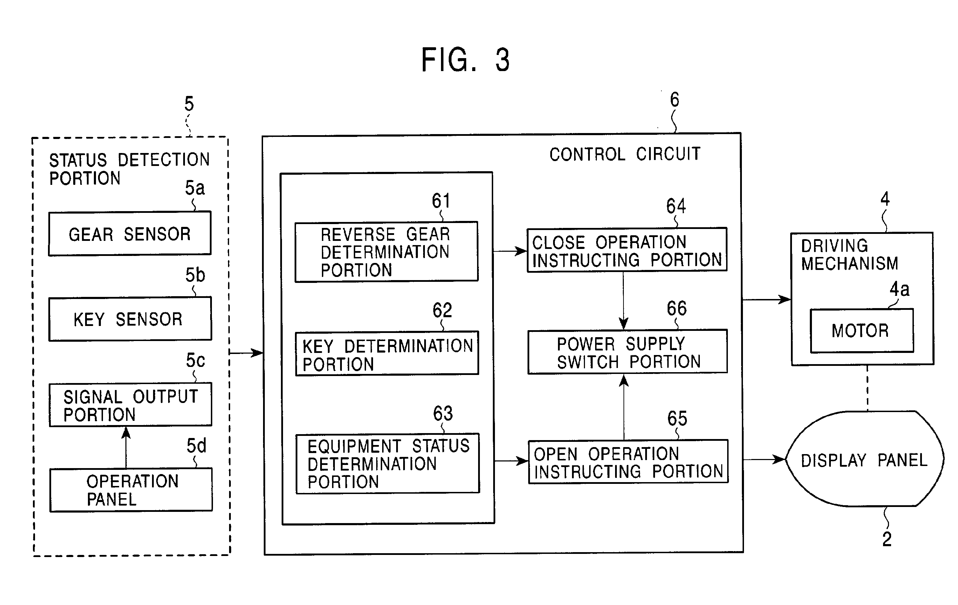

Embodiments of the present invention will now be described in detail with reference to Figs. 1 to 4.

### 1. Configuration

Referring to Figs. 1 to 3, an in-vehicle display apparatus according to an embodiment of the present invention includes a unit 3 having a mounting portion 1 and a display panel 2. The in-vehicle display apparatus further includes a driving mechanism 4 for moving the display panel 2, a status detection portion 5, installed at a predetermined position in the vehicle, for detecting the status of on-vehicle equipment, and a control circuit 6 for controlling the operation of the driving mechanism 4 in response to a detection signal from the status detection portion 5.

The mounting portion 1 is installed in the ceiling in the interior of the vehicle and has a housing 1a in the form of a depression for housing the display panel 2. The display panel 2 includes a display device 2a, such as an LCD. The display panel 2 has an upper end that is pivotally mounted to the front end of the housing 1a, i.e., in the travelling direction of the vehicle, via a shaft (not shown) so that the display panel 2 rotates about the shaft. Thus, this arrangement allows the display panel 2 to move between an open position, in which the screen of the display portion 2a can be viewed from the rear seat, and a closed position, in which the display panel 2 is housed in the housing 1a.

The driving mechanism 4 is disposed in the mounting portion 1 and has a motor 4a, and a transmission portion (not shown), which includes, for example, a belt for transmitting the power of the motor 4a to the shaft of the display panel 2. The status detection portion 5 includes a gear sensor 5a, a key sensor 5b, a signal output portion 5c, and an operation panel 5d. It should be noted, however, that the operation panel 5d may be included in a portion other than the status detection portion 5.

The status detection portion 5 detects the status of on-vehicle equipment including a gear lever, an ignition switch, vehicle-mounted electronic equipment, and an operation unit for the vehicle-mounted electronic equipment.

The gear sensor 5a is disposed in a gear lever and outputs a corresponding detection signal to the control circuit 6 when the gear lever is put into reverse.

The key sensor 5b is disposed in the ignition switch of the vehicle and outputs a corresponding detection signal to the control circuit 6 when the ignition key is removed.

The signal output portion 5c is incorporated in vehicle-mounted electronic equipment (e.g., equipment that includes a TV or DVD) that displays video, and outputs to the control circuit 6 a detection signal as to whether the equipment is in an audio/video mode or whether it is powered ON.

The operation panel 5d serves as an operation unit for the vehicle-mounted electronic equipment and is disposed in the center console or the like in the vehicle. The operation panel 5d is provided with a plurality of buttons, including a button for turning on or off audio/video mode, a button for turning on or off the power supply of the vehicle-mounted electronic equipment, and a button for giving an instruction to open or close the display panel 2. The operation panel 5d can also be replaced by a touch panel that allows the user, in the same manner as with the buttons, to selectively operate the vehicle-mounted electronic equipment by directly touching icons displayed on the screen.

The control circuit 6 can be realized by controlling a computer with software. Since, in this case, the type or configuration of the hardware or software can take various forms as well as the range of features to be implemented by the software, virtual circuit blocks that implement those individual functions are used in the following description. Thus, the control block 6 includes a reverse gear determination portion 61, a key determination portion 62, an equipment status determination portion 63, a close operation instructing portion 64, an open operation instructing portion 65, and a power supply switch portion 66.

The reverse gear determination portion 61 determines that the gear sensor 5a has detected a signal indicating reverse gear. The key determination portion 62 determines that the key sensor 5b has detected a signal indicating removal of the ignition key. The equipment status determination portion 63 determines that the signal output portion 5c of the vehicle-mounted electronic equipment has detected a signal indicating the audio/video mode or a signal indicating the status of the power supply.

The close operation instructing portion 64 and the open operation instructing portion 65 each output an instruction signal for operating the motor 4a of the driving mechanism 4 in response to the results determined by the reverse gear determination portion 61, the key determination portion 62, and the equipment status determination portion 63, or in response to an instruction entered from the operation panel 5d. The open operation instructing portion 65 is configured such that, at a predetermined time after the open operation instructing portion 65 has determined that no reverse gear signal is detected from the reverse gear determination portion 61, it outputs an instruction signal for operating the motor 4a. In this case, the predetermined time for returning the display panel 2 to the open position may be set to an arbitrary value. However, the time is desirably set to, for example, less than one minute so as to minimize the effect on the usability during the audio/video mode.

The power supply switch portion 66 turns on/off a power circuit for a backlight or the like in the display device 2a. The connection required between the display device 2a and the vehicle-mounted electronic equipment is implemented with wires or the like installed in the vehicle.

### 2. Operation

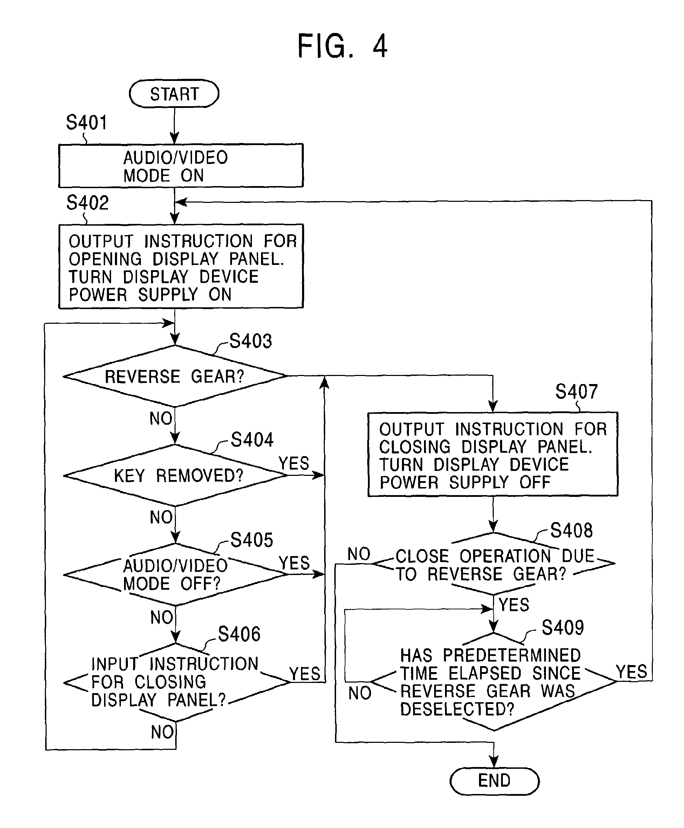

The operation of this embodiment will now be described in accordance with Fig. 4. Fig. 4 is a flow chart illustrating an example of the operation of the control circuit 6. First, when the passenger wishes to view TV broadcasts or DVDs, then he or she enters an instruction for placing the corresponding vehicle-mounted electronic equipment into the audio/video mode or turning on the power thereof. In turn, in step 401, a signal indicating that the corresponding equipment has been set to the audio/video mode or it has been powered on is transmitted from the signal output portion 5c of the vehicle-mounted electronic equipment to the control circuit 6. The equipment status determination portion 63 performs determination using this signal.

In step 402, the open operation instructing portion 65 then outputs a signal for operating the motor 4a of the driving mechanism 4 in the direction of the open position, and the power supply switch portion 66 also turns on the power circuit for the backlight or the like in the display device 2a. Thus, the display panel 2 pivotally moves from the closed position, in which the display panel 2 is housed in the housing 1a, to the open position. This allows the user seated in the rear seat to view video displayed, in accordance with a signal transmitted from the vehicle-mounted electronic equipment, on the screen of the display portion 2a.

In this state, that is, the state in which the display panel 2 is in the open position, when the driver shifts the gear lever into reverse to back up the vehicle, the gear sensor 5a detects the gear status and transmits a corresponding detection signal to the control circuit 6. In step 403, the reverse gear determination portion 61 performs determination using the detection signal. Based on the determination, in step 407, the close operation instructing portion 64 outputs a signal for operating the motor 4a of the driving mechanism 4 in the direction of the closed position, and the power supply switch portion 66 turns off the power circuit for the backlight or the like in the display device 2a. Thus, the display panel 2 pivotally moves to the closed position and is housed in the housing 1a.

In addition, in step 408, if the operation for closing the display panel 2 is determined to have been performed as a result of the reverse gear as described above, in step 409, at a predetermined time after the driver has stopped backing up and has shifted the gear into another gear, in step 402, the open operation instructing portion 65 outputs a signal for operating the motor 4a in the direction of the open position, and the power supply switch portion 66 turns on the power circuit for the backlight or the like in the display device 2a. Thus, the display panel 2 pivotally moves downward to the open position from the closed position in which the display panel 2 is housed in the housing 1a, so that the user seated in the rear seat can view video displayed on the screen of the display device 2a again.

With the display panel 2 in the open position, when the driver stops the vehicle and removes the ignition key, in step 404, the key sensor 5b detects the removal of the ignition key and transmits a corresponding detection signal to the control circuit 6. In step 404, the key determination portion 62 performs determination using this detection signal. Based on the determination, in step 407, the close operation instructing portion 64 outputs a signal for operating the motor 4a of the driving mechanism 4 in the direction of the closed position, and the power supply switch portion 66 turns off the power circuit for the backlight or the like in the display device 2a. Thus, the display panel 2 pivotally moves upward to the closed position and is housed in the housing 1a.

When the driver enters, using the operation panel 5d, an instruction for turning off the audio/video mode or the power of the vehicle-mounted electronic equipment, a corresponding signal is transmitted from the signal output portion 5c to the control circuit 6. In step 405, the equipment status determination portion 63 performs determination using this signal. Based on the determination, in step 407, the close operation instructing portion 64 outputs a signal for operating the motor 4a of the driving mechanism 4 in the direction of the closed position, and the power supply switch portion 66 turns off the power circuit for the backlight or the like in the display device 2a. Thus, the display panel 2 pivotally moves upward to the closed position and housed in the housing 1a.

Likewise, in step 406, when the driver enters, using the operation panel 5d, an instruction for placing the display panel 2 into the closed position, the close operation instructing portion 64 also outputs a signal for operating the motor 4a in the direction of the closed position. Thus, in step 407, the display power-circuit for the display device 2a is turned off, and the display panel 2 is placed into the closed position.

### 3. Advantages

According to the embodiment as described above, even with the display panel 2 in the open position, when the driver shifts the gear lever into reverse, the display panel 2 is automatically placed in the closed position. As a result, the driver can back up the vehicle while making sure it is safe to do so without the display panel 2 obstructing his or her field of view. When the driver stops backing up the vehicle, the display panel 2 is automatically placed in the open position. This allows the user to eliminate the need for returning the display panel 2 to the closed position, thereby minimizing the time for which the user is interrupted while viewing the video displayed thereon. Alternatively, the use of the operation panel 5d to input the instruction for the close operation also allows the display panel 2 to be returned to the closed position. This arrangement, therefore, can be advantageously used when the driver just wants to check for vehicles at the rear.

In addition, when the driver removes the ignition key after stopping the vehicle, the display panel 2 is automatically placed in the open position, so that it does not obstruct the user from getting in or out of the rear seat of the vehicle. This arrangement also allows the user to eliminate the need for manually returning the display panel 2 to the closed position. Furthermore, for example, when the vehicle-mounted electronic equipment, such as a TV or DVD, is in a mode in which the display device 2a needs to be operated, the display panel 2 is automatically placed in the open position, thus eliminating the need for manually opening the display panel 2. In addition, when the display panel 2 is in the closed position, the power circuit for the display of the display device 2a is automatically shut off. This allows the power consumption of the vehicle battery to be reduced and the lifetime of the display device 2a to be improved.

### 4. Other Embodiments

While the present invention has been described in connection with a specific embodiment, the present invention is by no means limited to the embodiment described above. For example, the arrangement in which the display panel placed into the closed position in the middle of the audio/video mode by the user and is then automatically returned to the open position is not limited to the above-described embodiment. For example, the display panel may be configured such that it returns to the open position upon detecting that the gear lever is shifted from reverse gear to another gear. Alternatively, rather than such an arrangement, the display panel may be returned to the open position in response to a user input through the operation panel.

The status detection portion may be configured with any element that can detect the status of each portion. For example, the status detection portion may include a switch whose contacts are mechanically opened or closed in response to the operation of the gears or ignition key, or may be an element that detects blocking of a laser beam. The configuration may also be such that the detection is performed via driving control circuits of the vehicle. The signal may be transmitted from the status detection portion to the control circuit by a cable, an optical fiber, wireless, or the like.

The display device for use in the display panel or operation panel may be realized by any device that allows electrical display, such as an LCD, OEL (Organic Electroluminescence) display, electroluminescent display, plasma display, CRT, or LED array. The operation panel may also be installed in the ceiling directly, i.e., without the mounting portion. The position at which the operation panel is disposed is also not limited to the center console, and may be disposed where a user in the rear seat can operate it. Likewise, the driving mechanism may be configured with any mechanism that allows the opening and closing of the display panel using a motor as the driving source.

The electronic equipment that feeds video data to be displayed on the display device is not limited to a TV or DVD, and can be implemented by various known equipment or equipment that may be used in the future, including a navigation system, a teletext broadcast receiver, and a computer that allows the use of web pages, electronic mail, or the like. A system that can realize functions of a number of different types of equipment with a single computer may also be used.

## Claims

1. An in-vehicle display apparatus comprising:
a display portion (2) having a screen for displaying video information, said display portion (2) being mounted to a ceiling in a vehicle for movement between an open position, in which the screen of said display portion (2) is viewable by at least one passenger, and a closed position, in which said display portion (2) is housed in the ceiling and is not viewable by the passenger;
a driving mechanism (4) for moving said display portion (2), said driving mechanism (4) including a motor (4a) as a driving source for said driving mechanism (4);
status detection means (5) for detecting the status of on-vehicle equipment and for sending a detection signal; and
control means (6) for controlling the operation of said driving mechanism (4) in response to the detection signal from said status detection means (5).

2. An in-vehicle display apparatus according to claim 1, wherein: said status detection means (5) includes a gear status detection portion (5a) for detecting the gear status of the vehicle; and said control means (5) includes a reverse gear determination portion (61) for determining that said status detection means (5) detects a reverse gear operation, and a close operation instructing portion (64) for outputting an instruction signal for operating the motor (4a) so as to cause said display portion (2) to move to the closed position when the reverse gear determination portion (61) determines the reverse gear operation.

3. An in-vehicle display apparatus according to claim 1 or 2, wherein: said status detection means (5) includes a key status detection portion (62) for detecting the status of the ignition key of the vehicle; and said control means (6) includes a key determination portion (62) for determining that said status detection means (5) detects removal of the ignition key, and a close operation instructing portion (64) for outputting an instruction signal for operating the motor (4a) so as to cause said display portion (2) to move to the closed position when the key determination portion (62) determines removal of the ignition key.

4. An in-vehicle display apparatus according to one of claims 1 to 3, wherein: said status detection means (5) includes an equipment status detection portion (5c) for detecting the status of vehicle-mounted electronic equipment; and said control means (6) includes an equipment status determination portion (63) for determining that the equipment status detection portion (5c) detects a state in which no video needs to be displayed on the vehicle-mounted electronic equipment, and a close operation instructing portion (64) for outputting an instruction signal for operating the motor (4a) so as to cause said display portion (2) to move to the closed position when the equipment status determination portion (63) determines the state in which no video needs to be displayed.

5. An in-vehicle display apparatus according to one of claims 1 to 4, further comprising operation means (5d) for entering an operation instruction, wherein said control means (6) includes a close operation instructing portion (64) for outputting an instruction signal for operating the motor (4a) so as to cause said display portion (2) to move to the closed portion in response to the operation instruction from said operation means (5d)

6. An in-vehicle display apparatus according to one of claims 2 to 5, wherein said control means (6) includes an open operation instructing portion (65) for outputting an instruction signal for operating the motor (4a) so as to cause said display portion (2) to move to the open position when no instruction is inputted from said status detection means (5) or said operation means (5d).

7. An in-vehicle display apparatus according to one of claims 1 to 6, wherein said display portion (2) includes a power circuit for supplying power thereto, and said control means (6) includes a power supply switch portion (66) for opening the power circuit when the close operation instructing portion (65) outputs the instruction signal for operating the motor (4a).
